# EUROPEAN PATENT APPLICATION

(11) **EP 0 586 090 A1**
(43) Date of publication of application: **09.03.1994**
(21) Application number: 93306037.8
(22) Date of filing: 30.07.1993
(51) Int. Cl.: H04B 7/26, H04B 7/216, H04J 13/00

(54) **Method and apparatus for communication in a CDMA cellular telephone system**

(30) Priority: 31.07.1992 ZA 925778
(71) Applicant: CSIR, Pretoria Transvaal Province (ZA)
(72) Inventor: Cabion, Paul Joseph, Johannesburg, Transvaal (ZA); Pauw, Christoff Karl, Pretoria, Transvaal (ZA)
(74) Representative: Crawford, Fiona Merle

(57) **Abstract**

The invention provides a cellular communication system with at least one central station (18) and a plurality of remote stations (20). The central station transmits a synchronizing signal to the remote stations. When a remote station (m) wishes to initiate a call to another remote station (n) via the central station, it transmits a primary call signal to the central station, and the operation of the remote station and the central station are synchronized. The central station then sends a secondary call signal to the called remote station, and the operation of this remote station is also synchronized with the central station. The synchronizing signal typically comprises an in-phase and a quadrature carrier, modulated by first and second synchronization codes which have low cross-correlation, such as maximal length pseudo-noise codes of the class which are used to generate Gold codes.

## Description

### BACKGROUND OF THE INVENTION

This invention relates to a cellular communication system, which finds a typical implementation as a cellular spread spectrum telephone system.

The provision of a cellular telephone system employing telephone units which are self-contained and which transmit and receive RF signals places a number of demands on the system designer. It is desirable to minimise power consumption and the radiated power of the various units forming the system, but also to provide as great an operating range as possible. It is also necessary to reduce interference between units, and to reduce their susceptibility to external interference as much as possible. Of course, it is also desirable to minimise the cost of the electronic circuitry and other hardware necessary to implement the system.

### SUMMARY OF THE INVENTION

According to a first aspect of the invention a method of establishing a communication link between first and second remote stations in a communication system comprising at least one central station and a plurality of remote stations includes the steps of:
transmitting at least one synchronising signal from the central station to the remote stations;
transmitting a primary call signal from the first remote station to the central station to initiate establishment of the communication link;
synchronising the operation of the first remote station with that of the central station, using information in the primary call signal to the central station;
transmitting a secondary call signal from the central station to the second remote station;
transmitting an answer signal from the second remote station to the central station; and
synchronising the operation of the second remote station with that of the central station, using information in the answer signal, to complete the establishment of the communications link, so that data transmitted between the first and second remote stations via the central station is processed synchronously at both remote stations and at the central station.

The at least one synchronising signal may comprise an in-phase and a quadrature carrier, modulated by respective first and second synchronisation codes which have low cross-correlation.

The synchronisation codes preferably have a common clock or chip period and are preferably of the same length.

The synchronisation codes may be maximal length pseudo-noise codes.

The synchronisation codes are preferably a "preferred pair" of codes selected for low average cross-correlation.

In this specification, the phrase "preferred pair" refers to the class of codes used to generate Gold codes.

The synchronisation of the operation of the remote stations with that of the central station is preferably achieved by processing the synchronising signal received by each remote station in a delay lock loop.

The remote stations may be telephone units.

Further according to the first aspect of the invention a communication system comprises at least one central station and a plurality of remote stations, the central station comprising:
master code generation means;
master control means; and
a plurality of transceiver modules;
each remote station comprising:
transceiver means;
local synchronisation means;
local code generation means; and
local control means;
the system being adapted to transmit at least one synchronising signal from the central station to the remote stations; to transmit a primary call signal from a first remote station to the central station to initiate establishment of a communication link; to synchronise the operation of the first remote station with that of the central station, using information in the primary call signal to the central station; to transmit a secondary call signal from the central station to a second remote station; to transmit an answer signal from the second remote station to the central station; and to synchronise the operation of the second remote station the central station, using information in the answer signal, thereby to establish a communications link between the first and the second remote stations via the central station, with data transmitted between the first and second remote stations via the central station being processed synchronously at both remote stations and at the central station.

The master control means of the central station may be a microprocessor.

The master code generator means may comprise a code generator adapted to generate maximal length pseudo-noise codes.

The local synchronisation means of each remote station may comprise a delay lock loop.

The delay lock loop may include a pseudo-noise code generator within the loop.

The at least one synchronising signal transmitted from the central station to the remote stations preferably comprises an in-phase and a quadrature carrier, modulated by respective first and second synchronisation codes which have low cross-correlation.

### BRIEF DESCRIPTION OF THE DRAWINGS

Figure 1 is a schematic diagram of a cellular communication system according to the invention;
Figure 2 is a schematic diagram of a single cell of the system;
Figure 3 is a schematic diagram of an central station of the system;
Figure 4 is a schematic diagram of a telephone unit of the system;
Figure 5 is a schematic block circuit diagram of the telephone unit of Figure 4; and
Figures 6a to 6e are diagrams representing characteristics of the signals generated by the system.

### DESCRIPTION OF AN EMBODIMENT

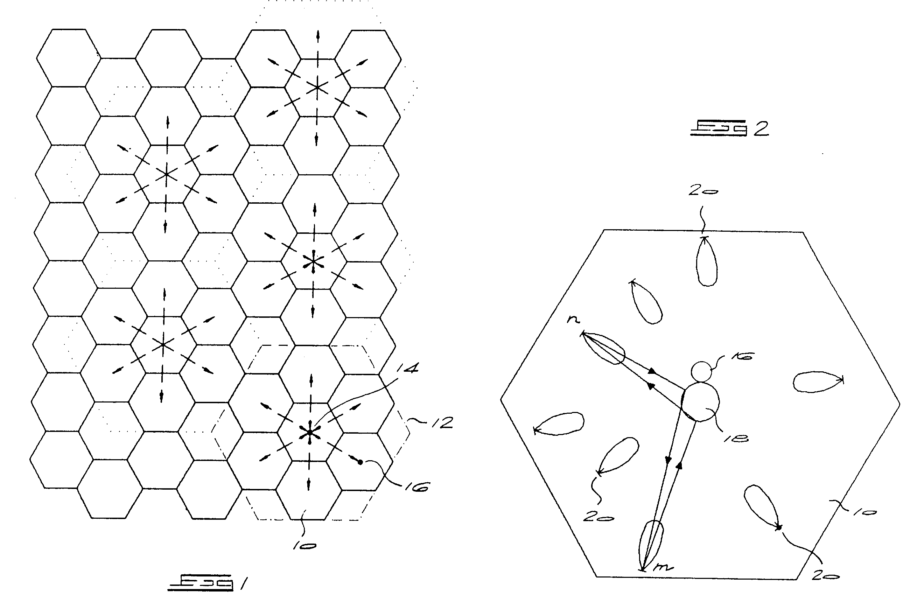

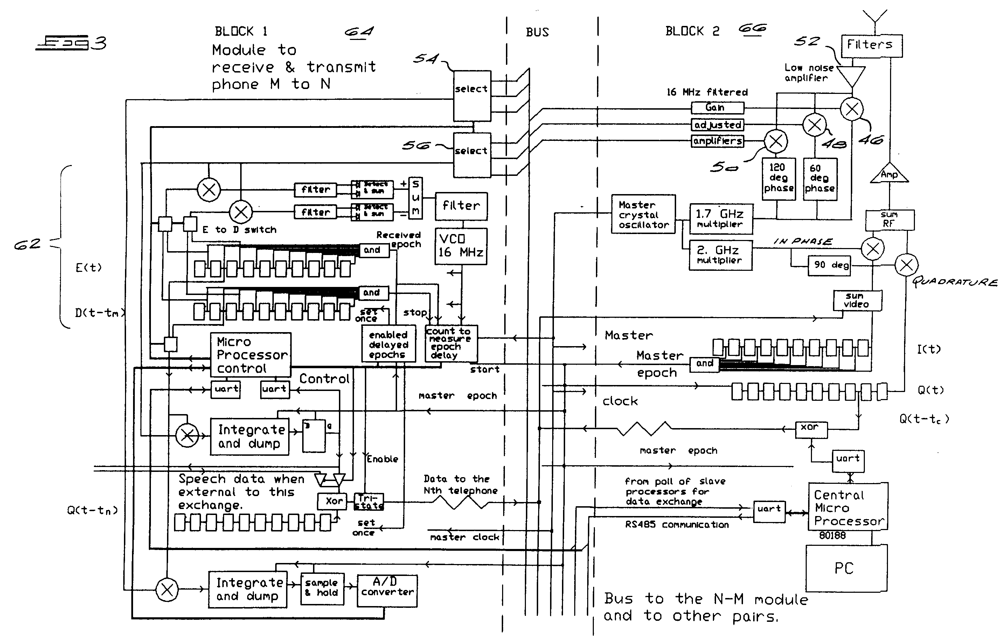

Referring first to Figures 1 and 2, a cellular communication system according to the invention is illustrated schematically. The system comprises a number of individual cells 10 which are ideally arranged hexagonally in clusters 12 of six cells each. At the center of each cluster 12 is a main station 14, with a complemental repeater 16 at the centre of each cell 10. The main stations 14 can be interconnected via conventional telecommunications links such as cables or optical fibres, or by radio or microwave links, for example. Figure 2 shows an individual cell 10 in greater detail. At the center of each cell, connected to the repeater 16, is a central station 18, which communicates with a number of remote stations in the form of individual telephones 20. The cell 10 is ideally hexagonal, and the maximum distance between any telephone 20 and the central central station 18 is typically 10 kilometres, depending on various factors such as the transmission power used and the topography of the area. Typically, there may be up to about 1000 telephone units 20 in a single cell 10. The telephone units 20 and the central station 18 communicate at microwave frequencies, and a polar diagram is indicated next to each telephone, indicating that the telephone units have directional antennas which must be oriented correctly in the direction of the central station 18.

In Figure 2, bi-directional communication is shown between a first telephone unit, designated "m", and a second telephone unit, designated "n", via the central station 18. Each central station 18 typically has 30 (or more) transceiver modules, with one module being required to effect a link between the central station and any telephone. The maximum number of telephones within a single cell which can be operational at one time is determined by the number of transceiver modules.

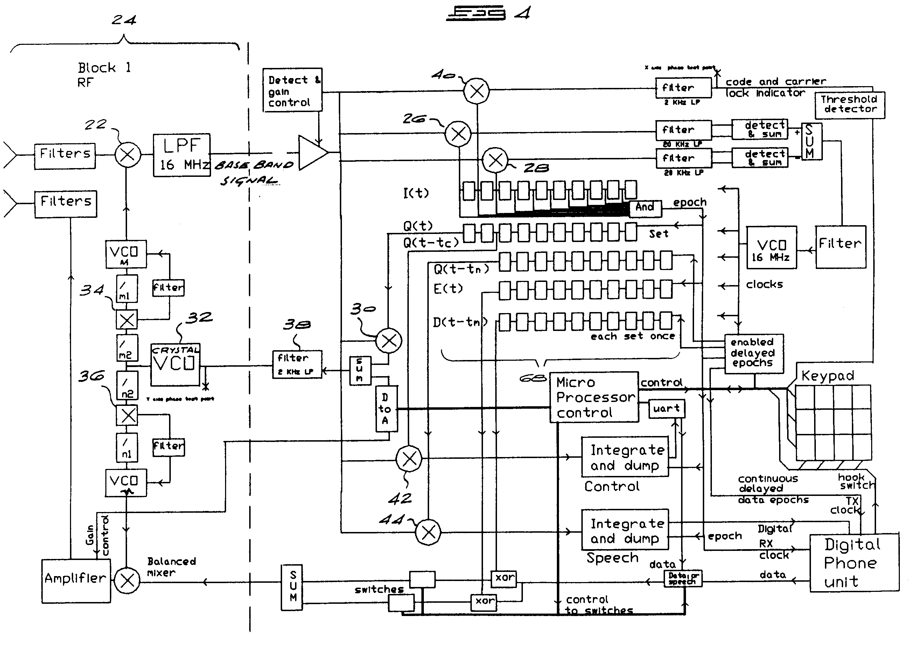

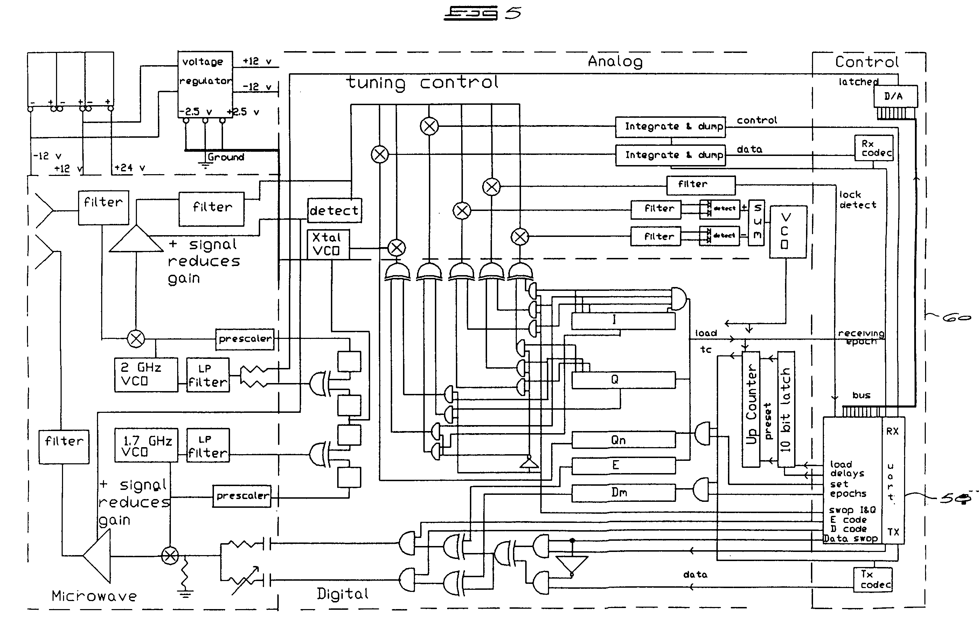

Referring now to Figures 3 and 4, a schematic block diagram of a central station 18 and a single telephone unit 20 are shown, respectively. The central station transmits a signal to all telephone units within its cell, at a typical power of about 25 watts, while each telephone unit transmits directionally to the central station 18, with a typical power of approximately 100 mW.

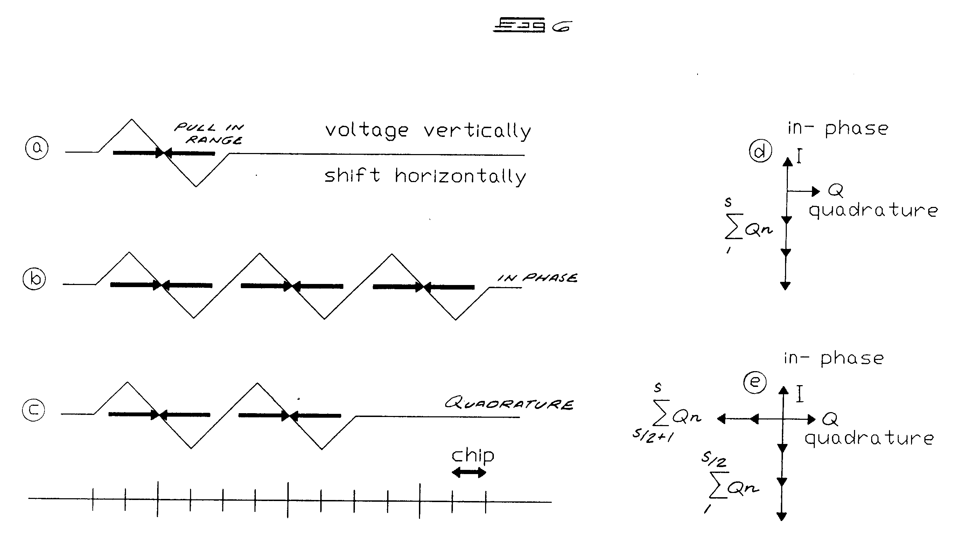

The central station continually transmits a synchronising signal to all of the telephone units within the cell which contains synchronising components Cᵢ and C_{q}. These synchronising components are derived by modulating (preferably bi-phase modulating) an in-phase and quadrature carrier by two codes I and Q which have low cross-correlation. The I and Q codes have a common clock or chip period, and have the same length. The Cᵢ and C_{q} sum may also be regarded as a carrier which is modulated to one of four phases during each chip period. Two possible modulation schemes are shown in Figures 6d and 6e.

The I and Q codes used in the prototype system were a "preferred pair" of maximal length pseudo-noise (PN) codes, selected to provide the advantages of low average cross-correlation. The Cᵢ and C_{q} synchronising signals enable all telephone units to achieve carrier and code synchronisation in operation, with a minimum of circuitry and a minimum of power, as their detection bandwidth can be suitably small. The use of the above codes enables synchronisation to be achieved by means of a delay lock loop (DLL) at each telephone, with only one RF mixer in the telephone unit being required. Known systems of a similar nature employ a Costas loop which uses two mixers with phase shifted VCO signals, as well as a product of the in-phase and quadrature filtered channels. However, the present invention does not require such sophisticated circuitry.

In the telephone units of the invention, code and code clock synchronisation is obtained by the use of an incoherent delay lock loop. The loop includes an RF mixer 22 in an RF transceiver section 24 of the telephone unit, as well as base band mixers 26 and 28. Code and code clock synchronisation can be acquired before carrier synchronisation, because the code I has a low cross-correlation to other modulations used by the system, and also because of the use of an incoherent delay lock loop.

The delay lock loop includes a receiver VCO (VCOₘ), which will phase lock to the incoming carrier if its output frequency moves into a carrier lock capture band. This happens because acquiring the synchronising component Cᵢ ensures that the component C_{q} is in synchronism with Q and multiplying by Q removes the code from the C_{q} component. The result is a signal at the output of a mixer 30 which is free of code. The output frequency of the VCOₘ is directly frequency related to that of a crystal-controlled VCO 32, as its submultiple m1 is phase locked by a mixer 34 to a submultiple m2 of the VCO 32. A transmitter VCO (VCOₙ) has an output which is similarly related to that of the VCO 32, by the use of a mixer 36.

The capture band of the delay lock loop is determined by a phase lock loop filter 38. Should this capture band be smaller than the initial precision of the VCO 32, it may be necessary to vary the control voltage of the VCO until lock occurs. The pull-out range of the loop can be made large by providing sufficient gain. A mixer 40 is used to generate a prompt product of the code I which is filtered and not detected. It will therefore produce a DC value only when both carrier and code lock are achieved. The power transmitted in quadrature using the Q code can be small. This carrier phase locking signal is protected by a very low value of code correlation, and can be filtered to a bandwidth which is less than that of the data itself.

The system transmits data in a binary digital form, which is added modulo 2 to versions of a communications code C at the central station (see Figure 3, block 1, where the code Q (t -tₙ) is the communications code generated, and is added to the data at the "sum video" block in Figure 3, block 2). These blocks are also labelled 64 and 66, respectively. The C code is advantageously a shifted version of the Q code in this invention. At the telephone the data is added to either the D or E codes (discussed below) at the "Data or speech" block in Figure 4, or, as shown at the bottom of Figure 5, by four gates which receive the signals E and Dₘ. All data transmitted and speech data received (see Figure 3, block 1) changes in synchronism with the I code. All data received at any telephone unit is in synchronism with the received I code output from mixers 40 and 42. The interference between channels then depends on the cyclic auto-correlation of the respective signals. Various versions of the C code are generated by shifting, so that C code components may have unique epochs. One version of the C code can be used for a common control channel used in call set-up and termination dialogues. All data sent from the central station is clocked from the I and Q code epochs. Thus, all data received by a telephone can be integrated and dumped at the I code epoch. At the central station, data received from a telephone via one of the 30 transceiver modules represented by block 1 in Figure 3 is exclusively OR'ed with shifted versions of the Q code and is summed by the processing unit of the central station (Figure 3, block 2). As shown in Figure 6d, a signal comprising the I signal added to the summed signals is modulated on the in-phase carrier. Figure 6e shows another modulation arrangement where some of the delayed signals are sent in quadrature to the I carrier. The telephone receiver can be made sensitive to these components by swapping the I and Q code taps after lock is achieved. The switching process is carried out in the switching circuit 58 of Figure 5. The telephone identifies its unique data by knowing its C code epoch relative to the common I code epoch. There is no data polarity ambiguity.

At the telephone, the correctly shifted C code, which in our example is a shifted version of the Q code, is multiplied with the received signal components and integrated over a data cycle to obtain the data. The extent of interference from other data signals then depends on the cyclic auto-correlation function, because the data is synchronous. Very low interference is possible with a maximal length PN code as its un-normalised auto-correlation function is -1 for all code shifts. The I code modulation level is preferably set higher than that of individual speech data levels for best acquisition. It is desirable to minimise the cross-correlation of I and C codes. If the C codes are shifted versions of the Q code and the I and Q codes are "preferred" code pairs, the central station can select specific shifts of the Q code which will ensure that the un-normalised cross-correlation between the I and C codes is -1. The I, Q and data channels will then have a minimum of interaction. In Figure 6a, the delay lock loop discriminator characteristic is shown as pulling in from just short of ± 2 chips. Thus, assigned values of Q's delay can be spaced 4 chips apart.

The receiving VCO (VCOₘ) (Figure 4) must be very precisely controlled over a small frequency range. The frequency must therefore be derived from a crystal VCO, and can be generated directly by multiplication or indirectly by division. The VCOₘ has a large controllable range, and its output is divided and phase locked to that of the crystal controlled VCO 32 in Figure 4. The telephone transmission frequency generated by the output VCO (VCOₙ) is locked to the same crystal VCO 32, and is thus precisely known on reception at the central station. The same arrangement for microwave frequency generation can be used at the central station, but is shown in a simplified form in Figure 3, block 2. In the next diagram, the driving oscillator would provide a stable fixed frequency output. The received code clock at the telephone unit is also used as the transmit code clock. The telephone units transmit control data with E and D codes, and speech data with the D code. During an initial calling dialogue, the telephone sends on the E code. As the E code is only used when establishing a call, its epoch as received depends on range, and is unlikely to clash should there be other users trying to establish a call simultaneously. All free central station transceiver modules scan continually for incoming E signals. Once such a signal is found, the central microprocessor of the central station is informed, and outputs a message to prevent further calling.

While the central station receives the E code without the data changing, it can measure the shift from the master code and data epoch to the E code epoch. The relevant time measuring circuitry is shown in Figure 3, block 1. The central station thus knows the shift between the received epoch from a particular phone and its transmitted data, allowing synchronisation of the data with the central station master epoch. The central station sends this information to the calling phone, which can then set its own data epoch, so that on reception all data epochs are synchronous. The calling phone can then send an identity code on the E code, while at the central station the received data is integrated with respect to the master epoch. Should there be more than one phone trying to establish a call, the E codes are likely to be at different received epochs, as this will be ensured by only 20 meters of range difference. The interfering carrier phase will probably not be optimised. However, this call will interfere, with its cross-correlation made larger by having no data synchronism.

The central station can send a unique delay for the telephone's D code, with respect to the telephone's transmit data epoch. This will once again ensure low interference from other users when a PN code is used for the D code. The E and D codes will also be "preferred" pairs of a Gold code group to have a minimum cross-correlation. The calling phone can transmit the E and D codes simultaneously for a short time, to enable the central station transceiver module to switch over from the E code to the D code without any code slip.

Because central station received carriers are phase locked to signals originating at the central station, a mixer can remove the carrier without phase locking circuits. As the carrier phase is unknown, three mixers 46, 48 and 50 are used following a low noise input amplifier 52 in the receiver circuit of the central station. The signals from these mixers contain the components from all telephones using code D and from telephones establishing calls from code E. To select which mixer's output is appropriate for the particular transceiver module of the central station, the correctly timed E or D code may be multiplied by each of them, and the one generating the largest signal is selected. Two three-way selectors 54 and 56 are provided for this purpose in each central station transceiver module.

The central station controls the transmission power of each telephone unit so that all reception at the central station is at the same strength, using received signal strength or delay time as a criterion. A direct method of controlling the transmit power, using the received AGC signal, is implemented in the transmit/receive circuitry shown in Figure 5. The received level from the most remote telephone units can be allowed to fall below this optimum level to achieve the greatest possible range. The receivers of individual telephone units would normally receive all C components at the same relative signal strength, if they are transmitted equally. Signals to remote telephones may be enhanced to prevent them falling below the noise level, at the expense of more interference from these signals on receivers near the central station, and with the disadvantage of increased overall power.

## Claims

1. A method of establishing a communication link between first (m) and second (n) remote stations in a communication system comprising at least one central station (18) and a plurality of remote stations (20), the method being characterised in that it includes the steps of:
transmitting at least one synchronising signal from the central station (18) to the remote stations (20);
transmitting a primary call signal from the first remote station (m) to the central station (18) to initiate establishment of the communication link;
synchronising the operation of the first remote station (m) with that of the central station (18), using information in the primary call signal to the central station;
transmitting a secondary call signal from the central station (18) to the second remote station (n);
transmitting an answer signal from the second remote station (n) to the central station (18); and
synchronising the operation of the second remote station (n) with that of the central station (18), using information in the answer signal, to complete the establishment of the communications link, so that data transmitted between the first and second remote stations via the central station is processed synchronously at both remote stations and at the central station.

2. A method according to claim 1 characterised in that the at least one synchronising signal comprises an in-phase and a quadrature carrier, modulated by respective first and second synchronisation codes which have low cross-correlation.

3. A method according to claim 2 characterised in that the synchronisation codes have a common clock or chip period and are of the same strength.

4. A method according to claim 3 characterised in that the synchronisation codes are maximal length pseudo-noise codes.

5. A method according to claim 4 characterised in that the synchronisation codes are a "preferred pair" of codes selected for low average cross-correlation.

6. A method according to any one of claims 1 to 5 characterised in that the synchronisation of the operation of the remote stations (20) with that of the central station (18) is achieved by processing the synchronising signal received by each remote station in a delay lock loop (22, 26, 28, 30, 32, 34, 36, 38, 40).

7. A method according to any one of claims 2 to 6 characterised in that the signals received at each remote station are directly converted using a single mixer operating at the signal carrier frequency, and characterised in that the carrier phase information is extracted at baseband using information in the synchronisation codes.

8. A method according to any one of claims 1 to 7 characterised in that the data transmitted by each remote station (20) to the central station (18) is delayed by a delay period calculated to compensate for the propagation delay between the remote station and the central station, to achieve synchronisation of data transmitted to the central station from respective remote stations.

9. A method according to any one of claims 1 to 8 characterised in that the power at which data is transmitted from each remote station (20) to the central station (18) is controlled by respective control signals transmitted from the central station to each remote station, so that the received signal power of signals from each remote station at the central station is substantially equal.

10. A communication system comprising at least one central station (18) and a plurality of remote stations (20), characterised in that the central station (18) comprises:
master code generation means (62);
master control means (64); and
a plurality of transceiver modules (66);
and further characterised in that each remote station (20) comprises:
transceiver means (24);
local synchronisation means (22, 26, 28, 30, 32, 34, 36, 38, 40);
local code generation means (68); and
local control means (60);
the system being adapted to transmit at least one synchronising signal from the central station to the remote stations; to transmit a primary call signal from a first remote station (m) to the central station to initiate establishment of a communication link; to synchronise the operation of the first remote station with that of the exchange, using information in the primary call signal to the central station; to transmit a secondary call signal from the central station to a second remote station (n); to transmit an answer signal from the second remote station to the central station and to synchronise the operation of the second remote station the central station, using information in the answer signal, thereby to establish a communications link between the first and the second remote stations via the central station, with data transmitted between the first and second remote stations via the central station being processed synchronously at both remote stations and at the central station.

11. A communication system according to claim 10 characterised in that the master control means of the central station (18) is a microprocessor.

12. A communication system according to claim 10 or claim 11 characterised in that the master code generator means comprises a code generator adapted to generate first and second synchronisation codes which are maximal length pseudo-noise codes with low cross-correlation.

13. A communication system according to claim 12 characterised in that the central station includes modulation means for generating the at least one synchronising signal by modulating an in-phase and a quadrature carrier with the first and second synchronisation codes.

14. A communication system according to any one of claims 10 to 13 characterised in that the local synchronisation means of each remote station (20) comprises a delay lock loop (22, 26, 28, 30, 32, 34, 36, 38, 40).

15. A communication system according to claim 14 characterised in that the delay lock loop includes a pseudo-noise code generator within the loop.

16. A communicaton system according to any one of claims 12 to 15 characterised in that the transceiver means (24) of each remote station (20) includes a single mixer operating at the carrier frequency of signals received by the remote station, so that the carrier phase information can be extracted at baseband using information in the synchronisation codes.

17. A communication system according to any one of claims 10 to 16 characterised in that the local control means (60) of each remote station (20) includes delay means (58) adapted to delay data transmitted from the remote station to the central station (18) by a delay period calculated to compensate for the propagation delay between the remote station and the central stations, to achieve synchronisation of data transmitted to the central station from respective remote stations.

18. A communication system according to any one of claims 10 to 17 characterised in that the master control means (64) of the central station (18) is adapted to transmit respective power control signals to each remote station (20), the local control means (60) of each remote station being responsive thereto to adjust the power at which data is transmitted to the central station, so that the received signal power of signals from each remote station at the central station is substantially equal.
